# EUROPÄISCHE PATENTSCHRIFT

(11) **EP 1 665 592 B1**
(45) Veröffentlichungstag und Bekanntmachung des Hinweises auf die Patenterteilung: **04.04.2007**
(21) Anmeldenummer: 04764614.6
(22) Anmeldetag: 30.08.2004
(51) Int. Cl.: H04H 3/00

(54) **VERFAHREN ZUR ÜBERWACHUNG DER ZEITSYNCHRONITÄT VON SENDERN IN EINEM GLEICHWELLENNETZ**
METHOD FOR MONITORING THE TIME SYNCHRONISATION OF EMITTERS IN A COMMON WAVE NETWORK
PROCEDE DE CONTROLE DE LA SYNCHRONISATION TEMPORELLE D'EMETTEURS DANS UN RESEAU SUR FREQUENCE COMMUNE

(30) Priorität: 11.09.2003 DE 10342040
(43) Veröffentlichungstag der Anmeldung: 07.06.2006
(73) Patentinhaber: Rohde & Schwarz GmbH & Co. KG, 81671 München (DE)
(72) Erfinder: BALZ, Christoph, 81543 München (DE); HOFMEISTER, Martin, 81541 München (DE)
(74) Vertreter: Körfer, Thomas
(86) Internationale Anmeldenummer: PCT/EP2004/009646
(87) Internationale Veröffentlichungsnummer: WO 2005/029736

(56) Entgegenhaltungen:
- EP-A- 1 063 799
- EP-A- 1 076 427
- EP-A- 1 278 319
- DE-A1- 10 005 287
- DE-A1- 19 642 633
- DE-C1- 19 830 638

## Beschreibung

Die Erfindung betrifft ein Verfahren zur Überwachung der Zeitsynchronität von Sendern in einem Gleichwellennetz.

Die Übertragungstechnik des terrestrischen Hör- und TV-Rundfunks basiert auf einem Netz von regional verteilten Sendern, die zeitsynchron mit derselben Sendefrequenzen ausstrahlen (Gleichwellennetz). Die Technik der Gleichwellennetze konnte erst mit Einführung der digitalen Übertragungsverfahren realisiert werden, in denen gemäß Übertragungsstandard Schutzintervalle (Guard-Intervalle) vorgesehen sind, die einen gewissen Toleranzbereich für unterschiedliche Laufzeiten der Übertragungssignale von den einzelnen Sender aufgrund unterschiedlicher Wegstrecken ermöglichen. Moderne digitale Mehrträgerverfahren (z.B. OFDM = orthogonal frequency division multiplexing) des digitalen Hörfunks (DAB = digital audio broadcasting) und des digitalen terrestrischen Fernseh-Rundfunks (DVB-T = digital video broadcasting terrestrial) basieren deshalb heute auf Gleichwellennetzen.

Ein funktionierendes Gleichwellennetz bedingt, daß jeder Empfänger des Gleichwellennetzes an jedem beliebigen Ort innerhalb des Sendebereichs des Gleichwellennetzes einen ausreichenden Signalpegel des Übertragungssignals empfängt und die von den einzelnen Sendern empfangenen Übertragungssignale innerhalb eines gewissen Toleranzbereiches (Schutz- oder Guard-Intervall bei DVB-T) zeitsynchron sind.

Auf Grund unterschiedlichster Störungen - z. B. zu geringe Sendeleistung eines Senders, fehlerhafte Synchronisierung eines Senders zum Gleichwellennetz, unterschiedliche Wetterbedingungen im Sendebereich des Gleichwellennetzes usw. - können die Anforderungen der Zeitsynchronität und des ausreichenden Signalpegels für einen störungsfreien Empfang im Gleichwellennetz verletzt sein. Hinzu kommt, daß sich den Nutzsignalen Störsignale von in das Gleichwellennetz einstreuenden Störsendern und Echosignale durch Reflexion von Nutzsignalen an Hindernissen überlagern können. Deshalb ist eine ständige Überwachung hinsichtlich der Zeitsynchronität und des Signalpegels des empfangenen Nutzsignals sowie hinsichtlich Störsignalfreiheit im gesamten Sendebereich durchzuführen. Bei auftretender Verletzung dieser obligatorischen Netzanforderungen ist die Störquelle - z. B. Sender, Zubringerstrecke, Hindernis - zu identifizieren und durch entsprechende Abhilfemaßnahmen ein korrekter und funktionierender Netzbetrieb wieder herzustellen.

EP 1 063 799 A1 offenbart ein Messverfahren zur Überwachung der Synchronität der Sendestationen in einem DAB Gleichwellennetz. Die Erfindung unterscheidet sich vom Verfahren aus EP 1 063 799 A1 darin, dass die vom Messempfänger jeweils gemessenen Kanalimpulsantworten der einzelnen Sender nicht nur zueinander in Beziehung gesetzt werden können, sondern auch mit zueinander zeitlich in Beziehung gesetzten Referenzkanalimpulsantworten zur Identifizierung einer mangelhaften Synchronität verglichen werden können.

In der DE 196 42 633 A1 wird ein Verfahren vorgestellt, bei dem zur Bestimmung des exakten Empfänger-Standorts in einem Gleichwellennetz eine Laufzeitdifferenzmessung zwischen den Empfangssignalen zweier Sender des Gleichwellennetzes durchgeführt wird. Da das Empfangssignal nicht nur das Nutzsignal beinhaltet, sondern auch Echosignale enthalten kann, sind diese zu identifizieren und auszublenden. Zur eindeutigen Identifizierung und Ausblendung von auftretenden Echosignalen wird die Übertragungscharakteristik der Übertragungskanäle beider Sender durch Messung der Kanalimpulsantwort ermittelt.

In der DE 199 37 457 A1 wird aufbauend auf diesem Verfahren der Laufzeitdifferenzenmessung durch Ermittlung der Kanalimpulsantwort der Übertragungskanäle zweier Sender eines Gleichwellennetzes ein Verfahren zur Überwachung von Sendern in einem Gleichwellennetz beschrieben. Hierbei werden zu Ermittlung der Zeitsynchronität der Sender eines Gleichwellennetzes jeweils die Laufzeitdifferenzen zweier Sender von einem Funkempfänger gemessen und mit einer Referenzlaufzeitdifferenz derselben beiden Sender verglichen. Bei zu großer Abweichung der Laufzeitdifferenzen, die eine fehlende Zeitsynchronität der beiden untersuchten Sender darstellt, werden die gestörten Sender vom Funkempfänger über eine Zentrale im Hinblick auf eine erneute Synchronisierung informiert.

Nachteilig an diesem Verfahren ist der nur paarweise Vergleich der Laufzeiten zweier Sender im Hinblick auf Zeitsynchronität zweier Sender zueinander. Die Zeitsynchronität mehrerer Sender, insbesondere einer Sendergruppe, die mit der Zentrale über eine gemeinsame Zubringerstrecke verbunden ist, kann auf diese Weise nicht ermittelt werden. Eine sichere und eindeutige Fehlerquellenidentifizierung hinsichtlich Fehlerquellen, die sich nur auf einen einzigen Sender auswirken (z.B. Phasenverstimmung eines einzigen Senders) und Fehlerquellen, die sich auf eine Sendergruppe auswirken (z.B. Übertragungsfehler in der Zubringerstrecke zur Sendergruppe), kann mit diesem Verfahren nicht verwirklicht werden.

Das Verfahren weist aufgrund des nur paarweisen Vergleichs der Laufzeitdifferenzen zweier Empfangssignale den weiteren Nachteil auf, daß nur relative Zeitasynchronitäten zwischen zwei zu vermessenden Sendern identifiziert werden können, wohingegen die absolute Zeitasynchronitäten der jeweiligen Sender zu einem Bezugssender und damit zum gesamten Gleichwellennetz nicht möglich ist. Besitzen die zu vermessenden Sender beispielsweise gleichgroße Zeitasynchronitäten zum Bezugssender, so sind sie zueinander zeitsynchron und werden deshalb durch dieses Verfahren fälschlicherweise als zeitsynchron zum Gleichwellennetz beurteilt.

Beim nur paarweisen Vergleich der Laufzeitdifferenzen der empfangenen Nutzsignale zweier Sender wird jeweils für einen Sender nur eine zeitbestimmende Größe - die durch den Empfänger gemessene Empfangszeit des empfangenen Nutzsignals - herangezogen. Eine Berücksichtigung mehrerer zeitbestimmender Größen - beispielsweise die durch den Empfänger gemessenen Empfangszeiten der zu einem Sender gehörigen Echosignale - erfolgt nicht, so daß auf diese Weise keine zusätzlichen Informationen im Hinblick auf eine eindeutigere und exaktere Bestimmung der verursachenden Fehlerquelle - z. B. Zeitverschiebung des Empfangssignals durch Schlechtwetterlage in einem bestimmten Sendegebiet des Gleichwellennetzes - möglich ist.

Der Erfindung liegt daher die Aufgabe zugrunde, das Verfahren zur Überwachung der Zeitsynchronität von Sendern in einem Gleichwellennetz mit den Merkmalen gemäß dem Oberbegriff von Anspruch 1 derart weiterzubilden, daß einerseits eine eindeutige Überprüfung der absoluten Zeitsynchronität aller in einem Gleichwellennetz integrierten Sender möglich ist und andererseits aus der Messung einer aufgetretenen Zeitasynchronität möglichst eindeutig und einfach auf die Fehlerquelle oder zumindest auf den Fehlerquellentyp der aufgetretenen Zeitasynchronität geschlossenen werden kann.

Die Aufgabe der Erfindung wird durch ein Verfahren zur Überwachung der Zeitsynchronität von Sendern in einem Gleichwellennetz mit den Merkmalen des Anspruchs 1 gelöst.

Im Gegensatz zum nur paarweisen Vergleich der Zeitsynchronität zweier Sender werden erfindungsgemäß auf der Basis einer Referenzmessung die Referenzimpulsantwort des stärksten Senders zur Pilotimpulsantwort definiert und alle übrigen Referenzimpulsantworten der übrigen Sender hinsichtlich ihrer Zeitsynchronität zum Gleichwellennetz auf die Pilotimpulsantwort im Rahmen einer Laufzeitmessung bezogen. Auf diese Weise ist es im Rahmen einer weiteren Messung sämtlicher zu den einzelnen Sendern gehörigen Impulsantworten - Summenimpulsantwort - möglich, durch Vergleich mit allen korrespondierenden Referenzimpulsantworten - Referenzsummenimpulsantwort - die Anzahl der nicht zeitsynchronen Sender zu ermitteln und davon abhängig die Synchronitätsfehlerklasse des auftretenden Synchronitätsfehlers zu ermitteln. Die Bestimmung der Synchronitätsfehlerklasse stellt einen wichtigen Schritt im Hinblick auf die Identifizierung der Synchronitätsfehlerquelle oder des Synchronitätsfehlertyps dar.

Vorteilhafte Ausgestaltungen der Erfindung sind in den abhängigen Ansprüchen angegeben.

Liegt nur eine Zeitabweichung zwischen einer gemessenen Impulsantwort und der zugehörigen Referenzimpulsantwort und damit eine Zeitasynchronität nur eines Senders zum Gleichwellennetz vor, so kann bei einem derartigen Synchronitätsfehler der ersten Synchronitätsfehlerklasse gemäß Anspruch 6 ganz gezielt die Fehlerquelle beim jeweiligen Sender lokalisiert werden.

Liegen dagegen Zeitabweichungen zwischen gemessener Impulsantwort und zugehöriger Referenzimpulsantwort bei mehreren, aber nicht allen übrigen n-1 Sendern des Gleichwellennetzes vor, so können bei derartigen Synchronitätsfehlern der zweiten Synchronitätsfehlerklasse gemäß Anspruch 7 gezielter Synchronitätsfehlerquellen, die eine Sendergruppe betreffen, verfolgt werden (z.B. Übertragungsfehler in der Zubringerstrecke zu einer Sendergruppe, Schlechtwettergebiet in einem bestimmten Sendegebiet usw.).

Eine Zeitabweichung zwischen allen n-1 übrigen gemessenen Impulsantworten und den zugehörigen Referenzimpulsantworten führt zu einem Synchronitätsfehler der dritten Synchronitätsfehlerklasse gemäß Anspruch 8. Bei derartigen Synchronitätsfehler kann u.U. einzig und allein der zur Pilotimpulsantwort gehörige stärkste Sender des Gleichwellennetzes neben pegel- auch phasenverstimmt sein. Dieser spezifische Fall ist über eine Korrelationsanalyse zwischen Referenzsummenimpulsantwort und Summenimpulsantwort zu ermitteln.

Neben der Überwachung der Zeitsynchronität kann das Verfahren auch zur Überwachung des richtigen Signalpegels der einzelnen Sender des Gleichwellennetzes eingesetzt werden. Bei einer Abweichung des Signalpegels der gemessenen Impulsantwort zur Referenzimpulsantwort muß die Sendeleistung des jeweiligen Senders entsprechend angepaßt werden.

Gemäß Anspruch 4 weisen die einzelnen Referenzimpulsantworten der Referenzsummenimpulsantwort vorzugsweise jeweils Fehlertoleranzbereiche in der Dimension der Zeit und des Signalpegels auf, die einen zeitsynchronen Sender mit angepaßten Signalpegel klassifizieren, falls dessen gemessene Impulsantwort in diesem Fehlertoleranzbereich liegt.

Ein Ausführungsbeispiel der Erfindung ist in der Zeichnung dargestellt und wird nachfolgend näher beschrieben. Es zeigen:
- Fig. 1: eine Überblickdarstellung eines Gleichwellennetzes;
- Fig. 2: eine grafische Darstellung der Referenzsummenimpulsantwort mit Fehlertoleranzbereichen;
- Fig. 3: eine grafische Darstellung der Fehlertoleranzbereiche der Referenzimpulsantworten, der gemessenen Impulsantworten und Störimpulse;
- Fig. 4: eine tabellarische Darstellung der Fehlertoleranzbereiche der Referenzimpulsantworten, der gemessenen Impulsantworten und Störimpulse;
- Fig. 5: eine graphische Darstellung der Wirkung von Zeitfenstern der Fourier-Transformation auf die Identifizierung von Impulsen;
- Fig. 6a: eine grafische Darstellung von Intersymbolinterferenzen bei fehlender Zeitsynchronität von Sendern und
- Fig. 6B: eine grafische Darstellung der Summenimpulsantwort nach einem Snychronisiervorgang.

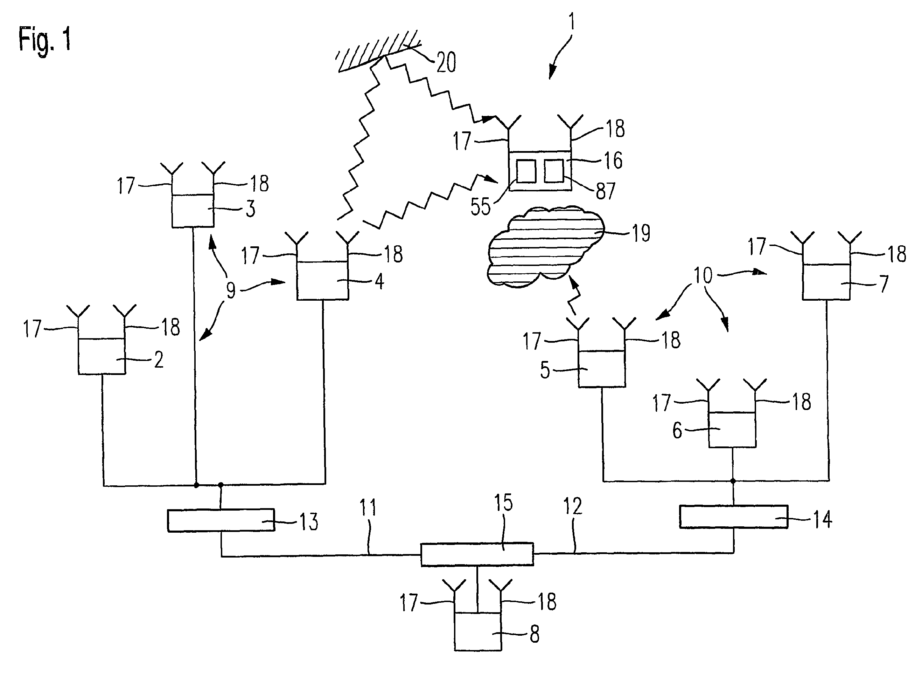

Das erfindungsgemäße Verfahren zur Überwachung der Zeitsynchronität von Sendern in einem Gleichwellennetz wird in einer Ausführungsform nachfolgend unter Bezugnahme auf Fig. 1 bis 6B beschrieben.

Gemäß Fig. 1 besteht ein Gleichwellennetz 1 beispielsweise aus den im Sendebereich verteilten Sendern 2, 3, 4, 5, 6 und 7 sowie einer Zentrale 8. In diesem beispielhaften Gleichwellennetz 1 sind die Sender 2, 3 und 4 zu einer ersten Sendergruppe 9 und die Sender 5, 6 und 7 zu einer zweiten Sendergruppe 10 zusammengefaßt. Die erste Sendergruppe 9 ist über eine erste gemeinsame Zubringerstrecke 11 mit der Zentrale 8 verbunden, während die zweite Sendergruppe 10 über die zweite gemeinsame Zubringerstrecke 12 ebenfalls mit der Zentrale 8 verbunden ist. Die Koppelung der Sender 2, 3 und 4 an die erste Zubringerstrecke 11 erfolgt über eine erste Verteilungseinrichtung 13, während die Koppelung der Sender 5, 6 und 7 an die zweite Zubringerstrecke 12 über eine zweite Verteilungseinrichtung 14 erfolgt. Die Zentrale 8 koppelt in eine Kopplungseinrichtung 15 in die erste Zubringerstrecke 11 und in die zweite Zubringerstrecke 12 ein. Zur Messung und Überwachung des Gleichwellennetzes 1 wird eine Empfangseinrichtung 16 verwendet. Die Empfangseinrichtung 16 kann stationär oder portabel genutzt werden, wobei bei portabler Empfangseinrichtung für jeden neuen Standort eine Referenzimpulsmessung der einzelnen Sendern hinsichtlich Pegel und Phase durchzuführen ist. Die Sender 2, 3, 4, 5, 6 und 7 sowie die Zentrale 8 und Empfangseinrichtung 16 sind jeweils mit einer Empfangsantenne 17 und einer Sendeantenne 18 bestückt. Im dargestellten Beispiel erfolgt die Rückmeldung von der Empfangseinrichtung 16 an die Zentrale 8 drahtlos. Wenn diese Rückmeldung über eine Leitung erfolgt, kann dort die Sendeantenne 18 entfallen

Die Empfangseinrichtung 16 dient einerseits dazu, Gebiete im Sendebereich des Gleichwellennetzes 1 zu identifizieren, die beispielsweise aufgrund von Hindernissen 19 im Übertragungskanal zwischen Sender und Empfänger entweder gar keinen oder nur einen zu schwachen Empfang aufweisen. Auch Echos aufgrund von Reflexionen des Übertragungssignals an großflächigen Körpern 20 (z.B. Bergen) können mit einer derartigen Empfangseinrichtung 16 nachgewiesen werden. Abhilfemaßnahmen können bei derartigen Störungen beispielsweise die Neupositionierung oder die Verstellung der Sendeleistung einzelner Sender sein.

Neben diesen den Signalpegel des Übertragungssignals und die Entstehung von Echossignalen überwachenden Aufgaben führt die Empfangseinrichtung 16 auch Messung und Überwachung der Zeitsynchronität der im Gleichwellennetz 1 integrierten Sender 2, 3, 4, 5, 6 und 7 durch.

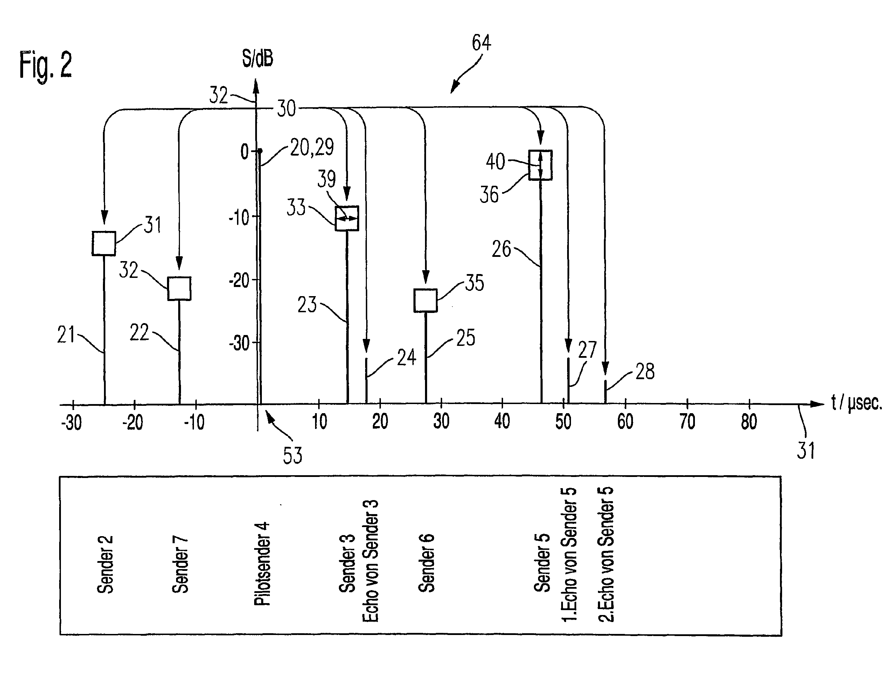

Nach dem erfindungsgemäßen Verfahren wird die Empfangseinrichtung 16 in ausgewählten Positionen innerhalb des Sendebereich des Gleichwellennetzes 1 positioniert. Für jede dieser Positionen wird zu jedem Sender 2, 3, 4, 5, 6 und 7 des Gleichwellennetzes 1 die Impulsantwort für den entsprechenden Übertragungskanal von dem Sender zu der Empfangseinrichtung 16 von der Empfangseinrichtung 16 ermittelt. Dies kann z. B. anhand der Pilotträger (Scattered Pilot) bei einem DVB-T Signal erfolgen, so wie dies grundsätzlich aus der DE 100 05 287 A1 bekannt ist. Die erstmalige Messung der Impulsantwort dient als Referenzmessung für nachfolgende Messungen. Die in der ersten Messung ermittelte Impulsantwort stellt deshalb eine Referenzimpulsantwort dar. Die Referenzimpulsantworten aller zu den Sendern 2, 3, 4, 5, 6 und 7 gehörigen Übertragungskanäle werden als Referenzsummenimpulsantwort 30 in der Form eines Echomusters gemäß Fig. 2 in einer zeitabhängigen Grafik 64 eines Grafiksystems 55 dargestellt, das in der Empfangseinrichtung 16 oder in einer mit der Empfangseinrichtung 16 verbundenen Einrichtung - beispielsweise ein über Internet mit der Empfangseinrichtung 16 verbundener Personal Computer - integriert ist.

Die Referenzimpulsantwort 20 des stärksten Senders beispielsweise Sender 4 - wird als Pilotimpuls 29 definiert, um die relative zeitliche Verschiebung der übrigen Referenzimpulsantworten 21 (Sender 2), 22 (Sender 7), 23 und 24 (Sender 3), 25 (Sender 6), 26, 27 und 28 (Sender 5) zu einem Bezugspunkt, dem Pilotimpuls, zu ermitteln. Als Bezugspunkt für die übrigen Referenzimpulsantworten 21, 22, 23, 24, 25, 26, 27 und 28 wird der Pilotimpuls 29 in den Ursprung des Koordinatensystems 53 der Grafik 64, bestehend aus der Abszisse 31 und der Ordinate 32, gesetzt. Die Abszisse 31 bildet die Empfangszeit der Referenzimpulsantwort in der Dimension Mikrosekunden oder in die dazu korrespondierende Entfernungsdimension Kilometer oder Meile ab. Die Ordinate 32 bildet den Signalpegel der Referenzimpulsantwort in Bezug zum Signalpegel des Pilotimpulses 29 in der Dimension Dezibel ab.

Aufgrund der zeitlichem Referenzierung der übrigen Referenzimpulsantworten 21, 22, 23, 24, 25, 26, 27 und 28 zum Pilotimpuls 29 entstehen Vorechos, welche Referenzimpulsantworten darstellen, die von der Empfangseinrichtung 16 zeitlich vor dem Pilotimpuls 29 empfangen werden (Referenzimpulsantworten 21 und 22). Analog entstehen Nachechos, welche als Referenzimpulsantworten von der Empfangseinrichtung 16 zeitlich nach dem Pilotimpuls 29 empfangen werden (Referenzimpulsantworten 23, 24, 25, 26, 27 und 28).

Da die Referenzsummenimpulsantwort 30 für nachfolgende Messungen der Impulsantworten durch die Empfangseinrichtung 16 als Referenzechomuster dienen und nachfolgende Messungen der Impulsantworten auch im Falle einer exakten Zeitsynchronität der beteiligten Sender 2, 3, 4, 5, 6 und 7 mit einer gewissen Abweichung zwischen den Referenzimpulsantworten und den gemessenen Impulsantworten verbunden sind, empfiehlt sich die Einführung eines gewissen Fehlertoleranzbereiches 31, 32, 33, 34, 35, 36, 37 und 38 um das jeweilige Idealwertepaar Referenz-Empfangszeit und Referenz-Signalpegel der jeweiligen Referenzimpulsantwort 21, 22, 23, 24, 25, 26, 27 und 28. Somit wird vom Operator der Empfangseinrichtung 16 für jede Referenzimpulsantwort 21, 22, 23, 24, 25, 26, 27 und 28 ein individueller Fehlertoleranzbereich 31, 32, 33, 34, 35, 36, 37 und 38 definiert, der vorzugsweise aus einem Fehlertoleranzband 39 in der Zeitdimension und einem Fehlertoleranzband 40 in der Signalpegeldimension besteht. Es kann jedoch ein Fehlertoleranzband 39 in der Zeitdimension ausreichen.

In einer der Referenzmessung nachfolgenden Messung werden von der Empfangseinrichtung 16 wiederum die Impulsantworten 41, 42, 43, 44, 45, 46, 47 und 48 der Sender 2, 3, 4, 5, 6, 7 und 8 des Gleichwellennetzes 1 empfangen und als Summenimpulsantwort 52 in das Koordinatensystem 53 einer neuen zeitabhängigen Grafik 65 des Grafiksystems 55 derart abgebildet, daß die gemessene Impulsantwort 53 des stärksten Senders 4 genau in den Ursprung des Koordinatensystems 53 der neuen Grafik 65 zu liegen kommt.

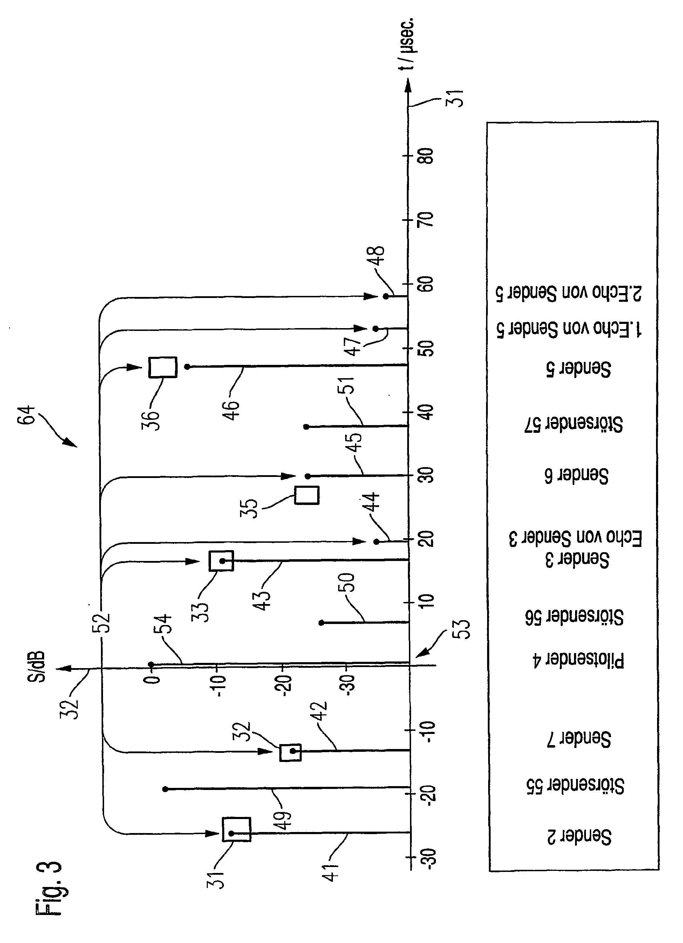

Zusätzlich zu den gemessenen Impulsantworten 41, 42, 43, 44, 45, 46, 47 und 48 der Sender 2, 3, 4, 5, 6, 7 und 8 des Gleichwellennetzes 1 werden von der Empfangseinrichtung 16 auch noch Störimpulse 49, 50 und 51 gemessen, die beispielsweise von Sendern 55, 56 und 57 aus Nachbarzellen erzeugt werden und in den Sendebereich des Gleichwellennetzes 1 eingestreut werden. Diese werden ebenfalls in das Koordinatensystem 53 der neuen Grafik 65 des Grafiksystems 55 entsprechend ihrer Empfangszeit und ihres Signalpegels abgebildet. Da in das Koordinatensystem 53 der neuen Grafik 65 des Grafiksystems 55 die Fehlertoleranzbereiche 31, 32, 33, 34,35, 36, 37 und 38 der Referenzimpulsantworten 21, 22, 23, 24, 25, 26, 27 und 28 der Referenzmessung gemäß Fig. 3 ebenfalls abgebildet sind, kann der Operateur der Empfangseinrichtung 16 relativ einfach die Impulsantworten identifizieren, die außerhalb des definierten Fehlertoleranzbereiches der korrespondierenden Referenzimpulsantworten liegen.

In der beispielhaften Messung, die in Fig. 3 dargestellt ist, liegt eine nicht mehr tolerierbare Zeitverschiebung zwischen Referenzimpulsantwort und gemessener Impulsantwort bei der Impulsantwort 45 vor, woraus auf einen Synchronitätsfehler zwischen dem stärksten Sender 4 und dem Sender 6 geschlossen werden kann.

Außerdem ist in der beispielhaften Messung, die in Fig. 3 dargestellt ist, ersichtlich, daß der Signalpegel der gemessenen Impulsantwort 46 außerhalb des tolerierbaren Fehlertoleranzbereiches 36, insbesondere unterhalb des Fehlertoleranzbandes 40 in der Signalpegeldimension des Fehlertoleranzbereiches 36, erscheint. Der gegenüber dem Signalpegel der zugehörigen Referenzimpulsantwort 26 zu geringe Signalpegel der Impulsantwort 46 kann beispielsweise auf eine zu geringe Sendeleistung des Senders 5 oder auf eine zu starke Dämpfung des Übertragungssignals vom Sender 5 zur Empfangseinrichtung 16 aufgrund beispielsweise einer Schlechtwetterperiode im Übertragungskanal vom Sender 5 zur Empfangseinrichtung 16 zurückzuführen sein.

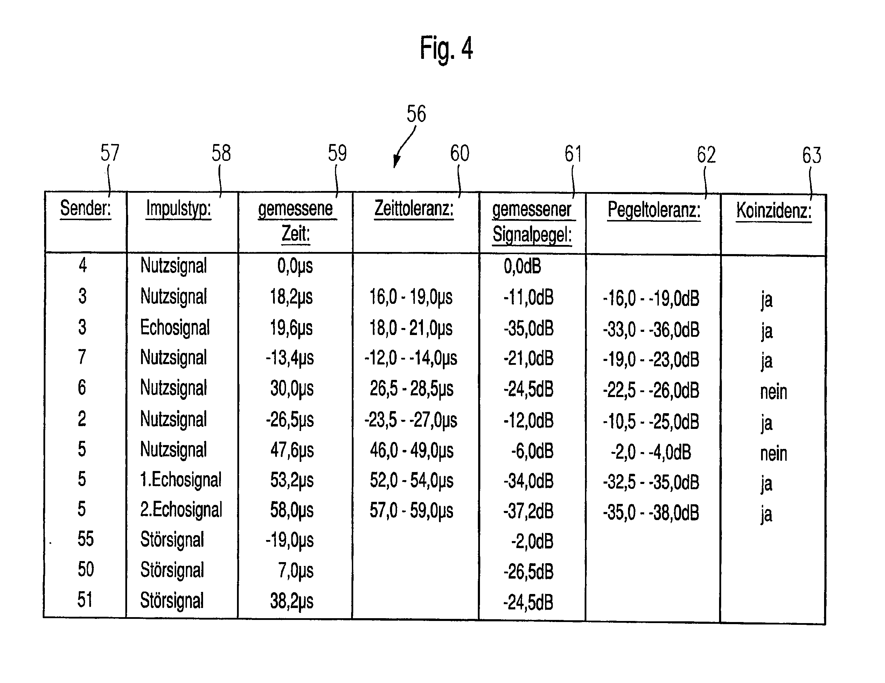

Neben der grafischen Darstellung des Summenimpulsantwort 30 in einer Grafik 65 des Grafiksystems 55 ist auch eine Darstellung sämtlicher empfangener Impulsantworten 41, 42, 43, 44, 45, 46, 47 und 48 sowie aller Störimpulse 49, 50 und 51 in einer Tabelle 56 gemäß Fig. 4 möglich, die von einem Verarbeitungssystem 87 in der Empfangseinrichtung 16 erstellt und laufend aktualisiert wird. Die Tabelle 56 enthält folgende Spalten:
- Spalte 57 mit der Bezeichnung des Senders des empfangenen Impulses,
- Spalte 58 mit dem Typ des empfangenen Impulses (Nutzsignal, Echosignal, Störsignal),
- Spalte 59 mit der gemessenen Empfangszeit des empfangenen Impulses,
- Spalte 60 mit den vom Operator definierten Fehlertoleranzgrenzen der Empfangszeit des empfangenen Impulses,
- Spalte 61 mit dem gemessenen Signalpegel des empfangenen Impulses in Relation zum Signalpegel des Pilotimpulses
- Spalte 62 mit den vom Operator definierten Fehlertoleranzgrenzen des Signalpegels des empfangenen Impulses und
- Spalte 63 mit einer Aussage über die Koinzidenz zwischen gemessenem Impuls und Fehlertoleranzbereich des korrespondierenden Referenzimpulses.

In der Tabelle 56 in Fig. 4 sind die entsprechenden Werte der beispielhaften Messung in der grafischen Darstellung von Fig. 3 eingetragen.

Von der Verarbeitungseinheit 57 der Empfangseinrichtung 16 werden für jeden Meßvorgang jeweils diejenigen Impulsantworten identifiziert, die zeitlich nicht in die Fehlertoleranzbereiche der korrespondierenden Referenzimpulsantworten fallen.

Wird nur eine einzige Impulsantwort der Messung außerhalb des jeweiligen Fehlertoleranzbereiches erfaßt, so ist mit hoher Wahrscheinlichkeit der entsprechende Sender zum Gleichwellennetz 1 nicht synchronisiert. Bei einem derartigen Synchronitätsfehler handelt es sich um einem Fehler der ersten Synchronitätsfehlerklasse. Wird von der Verfahrenseinheit 57 demnach nur bei einer gemessenen Impulsantwort eine Abweichung zum jeweiligen Fehlertoleranzbereich festgestellt, so wird dieser Synchronitätsfehler der ersten Synchronitätsfehlerklasse zugewiesen und ein korrespondierender erster Alarm A1 gesetzt.

Werden bei einem Gleichwellennetz mit n Sendern die neben der Pilotimpulsantwort gemessenen n-1 Impulsantworten bezüglich ihrer Koinzidenz mit den korrespondierenden Fehlertoleranzbereichen von der Verarbeitungseinheit 57 überwacht und ergeben sich bei mindestens zwei und gleichzeitig weniger als n-1 dieser Impulsantworten eine fehlende Koinzidenz, so liegt ein Synchronitätsfehler der zweiten Synchronitätsfehlerklasse vor. Diese wird von der Verarbeitungseinheit 57 festgestellt und es wird ein korrespondierender zweiter Alarm A2 gesetzt. Bei einem Synchronitätsfehler der zweiten Synchronitätsfehlerklasse kann es sich um einen Fehler in einer Sendergruppe, beispielsweise der ersten Sendergruppe 9 oder der zweiten Sendergruppe 10 der Fig. 1, handeln. Anhand der Senderidentifizierung der gemessenen Impulsantworten der Summenimpulsantwort 52 kann ein derartiger Synchronitätsfehler eines Sendergruppe identifiziert werden.

Fallen bei einem Gleichwellennetz mit n Sendern alle n-1 Impulsantworten nicht in die korrespondierenden Fehlertoleranzbereiche, so können die Sender aller n-1 Impulsantworten zueinander zeitsynchron sein, während der stärkste Sender des Gleichwellennetzes, dessen Impulsantwort als Pilotimpulsantwort des Gleichwellennetzes dient, zum Gleichwellennetz zeitasynchron sendet. Dieser Sonderfall wird durch eine Korrelationsanalyse zwischen den gemessenen n-1 Impulsantworten und den korrespondierenden n-1 Referenzimpulsantworten identifiziert. Kommt es dabei zu einer Korrelation zwischen den gemessenen n-1 Impulsantworten und den korrespondierenden n-1 Referenzimpulsantworten, so liegt dieser Sonderfall eines Synchronitätsfehlers vor, der zu einer Klassifizierung in die dritte Synchronitätsfehlerklasse und zu einer Auslösung eines dritten Alarms A3 durch die Verarbeitungseinheit 57 führt.

Die Alarme A1 bis A3 werden gemeinsam mit den entsprechenden gemessenen Echomustern nach Fig. 3 von der Empfangseinrichtung 16 der Zentrale 8 zugeführt, um dort entsprechende Auswertungen und Analysen zur konkreten Fehlerlokalisierung durchzuführen und darauf aufbauend entsprechende Abhilfemaßnahmen zur Synchronisierung aller Sender 2, 3, 4, 5, 6 und 7 des Gleichwellennetzes 1 im Bereich des Sender 2, 3, 4, 5, 6 und 7, der Zubringerstrecken 11 und 12 usw. durchzuführen.

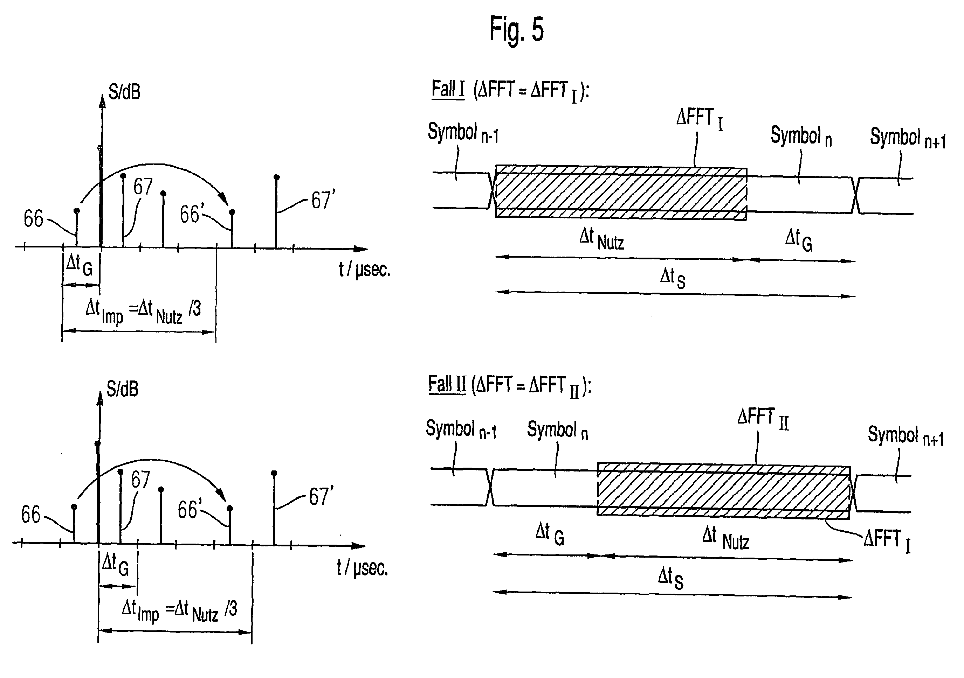

Die Ermittlung der Summenimpulsantwort 65 erfolgt im allgemeinen durch eine inverse Fourier-Transformation aus der Übertragungsfunktion des Übertragungskanals, der durch die Summe der Signale aller im Gleichwellennetz 1 beteiligten Sender 2, 3, 4, 5, 6 und 7 entsteht. Die Anregung der Übertragungskanäle zur Ermittlung der Summenimpulsantwort 65 erfolgt durch sogenannte Pilotträger (scattered pilots), die im Mittel beispielsweise bei DVB-T in jedem dritten Träger in einem Übertragungsrahmen des OFDM-modulierten Übertragungssignals angeordnet und einzig durch eine 2-PSK-Modulation - im Gegensatz zu den QAM-modulierten Nutzdatenträgern - moduliert sind. Die Summenimpulsantwort 65 weist einen periodischen zeitlichen Verlauf auf, da das Frequenzspektrum der Summenimpulsantwort 65 nur an den Pilotträgern im Frequenzbereich periodisch abgetastet vorliegt. Da Pilotträger nur in jedem dritten Träger vorliegen, ist der Trägerabstand zwischen den Pilotträgern um den Faktor 3 höher als der Trägerabstand Δf_{T} zwischen jedem einzelnen Träger. Folglich ist der zulässige Zeitbereich der Summenimpulsantwort Δt_{Imp} gegenüber dem Nutzintervall Δt_{Nutz} eines OFDM-modulierten Übertragungssignals um einen Faktor 3 geringer (Δt_{Imp}= Δt_{Nuz}/3 = 1/(3*Δf_{T})). Der zulässige Zeitbereich der Summenimpulsantwort Δt_{Imp} kann bei alternativen Verfahren zur Ermittlung der Summenimpulsantwort 65 andere Werte annehmen (bei Ermittlung der Summenimpulsantwort 65 mittels inverser Fourier-Transformation aus den FIR- und IIR-Filterkoeffizienten eines in der Empfangseinrichtung 16 integrierten Entzerrers ergibt sich der zulässige Zeitbereich Δt_{Imp} aus der Filterlänge der FIR- und IIR-Filter). Um aufgrund von Laufzeitunterschieden Intersymbolinterferenzen zu vermeiden, wird ein Schutzintervall Δt_{G} definiert, das dem Nutzintervall Δt_{Nutz} gemäß Fig. 5 vorausgeht und in dem keine Auswertung des Überlagerungssignals durch die Empfangseinrichtungen 16 erfolgt.

Das Zeitfenster ΔFFT der diskreten Fourier-Transformation zur Bestimmung der diskreten Summenimpulsantwort 65 entspricht der Dauer des Nutzintervalls Δt_{Nutz} eines OFDM-modulierten Übertragungssignals. Aufgrund unterschiedlicher Positionierung des Zeitfensters ΔFFT der diskreten Fourier-Transformation innerhalb der gesamten Symbollänge Δtₛ eines OFDM-modulierten Übertragungssignals (Δtₛ = Δtₛ + Δt_{Nutz}) kann es zu unterschiedlichen Relativpositionen zwischen dem zulässigen Zeitbereich der SummenimpuLsantwort Δt_{Imp}.und dem Schutzintervall Δt_{G} kommen

Im Extremfall I (ΔFFT = ΔFFT_{I}) deckt das Zeitfenster ΔFFT den Beginn der gesamten Symbollänge Δtₛ ab, während das Schutzintervall Δt_{G} das Ende der gesamten Symbollänge Δtₛ abdeckt. In diesem Fall führen Vorechos, in Fig. 5 beispielsweise die Impulsantwort 66, nicht zu Intersymbolinterferenzen, da die Impulsantwort 66 als Vorecho erkannt wurde und sich im Schutzintervall Δt_{G} befindet. Werden folglich in der Summenimpulsantwort 65 Impulsantworten erwartet, die Vorechos bezüglich der leistungsstärksten Impulsantwort (bei 0 dB, 0 µs) darstellen, so wird die Positionierung des Zeitfensters ΔFFT wie im Extremfall I gewählt.

Im Normalfall (Fall II: ΔFFT = ΔFFT_{II}) deckt das Zeitfenster ΔFFT das Ende der Symbollänge Δtₛ ab, während das Schutzintervall Δt_{G} den Beginn der Symbollänge Δtₛ abdeckt. Nachechos, in Fig. 5 beispielsweise die Impulsantwort 67, führen nicht zu Intersymbolinterferenzen, da die Impulsantwort 67 sich im Schutzintervall Δt_{G} befindet. Werden folglich in der Summenimpulsantwort 65 Impulsantworten erwartet, die Nachechos bezüglich der leistungsstärksten Impulsantwort (bei 0 dB, 0 µs) darstellen, so wird die Positionierung des Zeitfensters ΔFFT wie im Fall II gewählt.

Wird folglich bei einem gesetzten Fehlertoleranzbereich im Vorechobereich, beispielsweise Fehlertoleranzbereiche 31 und 32 in Fig. 3, von der Empfangseinrichtungen 16 eine korrespondierende Impulsantwort, beispielsweise Impulsantwort 41 und 42 in Fig. 3, nicht registriert, weil entweder der entsprechende Signalpegel zu schwach ist oder gar nicht vorhanden ist, so werden durch das erfindungsgemäße Verfahren zur Überwachung der Zeitsynchronität von Sendern in einem Gleichwellennetz zusätzlich zu den Fehlertoleranzbereichen 31 bzw. 32 entsprechende Fehlertoleranzbereiche zu Zeitpunkten gesetzt, die exakt um die Periodenlänge der Summenimpulsantwort 65 (= Δt_{Imp}) gegenüber den Vorecho-Zeitpunkten zeitlich nach vorne verschoben sind und im zulässigen Zeitbereich der Summenimpulsantwort Δt_{Imp} als Fehlertoleranzbereiche fungieren. Auf diese Weise können die bei Wahl des Zeitfensters ΔFFT entsprechend der Extremposition ΔFFT_{II} im zulässigen Zeitbereich der Summenimpulsantwort Δt_{Imp} zu liegen kommenden Echos, die aufgrund der Periodizität der Summenimpulsantwort 65 den außerhalb des zulässigen Zeitbereich Δt_{Imp} der Summenimpulsantwort 65 liegenden Vorechos entsprechen, von der Empfangseinrichtung 16 sicher und eindeutig identifiziert werden.

Falls ein aufgebautes Gleichwellennetz 1 noch nicht abgeglichen ist, kann es aufgrund der Periodizität der Summenimpulsantwort 65 zu Fehlinterpretationen der zeitlichen Lage der außerhalb des zulässigen Zeitbereichs Δt_{Imp} liegenden Impulsantwort 69 kommen. Eine außerhalb des zulässigen Zeitbereichs liegende Impulsantwort 69 wird aufgrund der Periodizität der Summenimpulsantwort in den zulässigen Zeitbereich Δt_{Imp} als Impulsantwort 69' oder 69" wiederholt. Da diese wiederholten Impulsantworten 69' und 69" innerhalb des Intersymbol-Interferenz-freien Zeitbereichs Δt_{G} liegen, wird die Verzögerung dieser Impulsantwort fälschlich als unbedeutend interpretiert, obwohl die ursächliche Impulsantwort 69 zu einer Intersymbol-Interferenz führt.

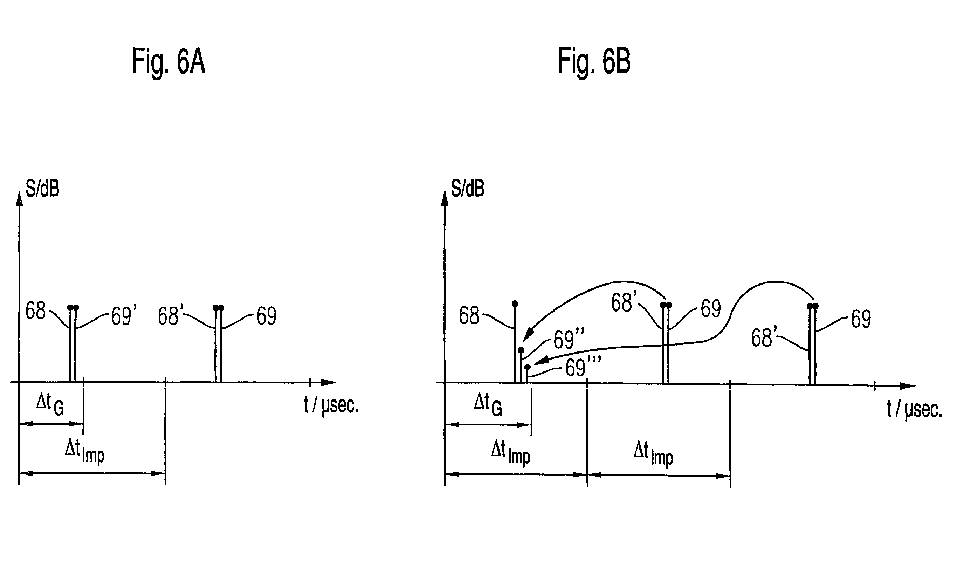

Diese unerwünschte Intersymbol-Interferenz kann beseitigt bzw. erkannt werden durch zeitliche Verschiebung des Übertragungssignals des Senders, der zu der Impulsantwort 69 führt. Die zeitliche Verschiebung wird dabei so groß gewählt, dass die Impulsantwort in den Zeitbereich des Schutzintervalls Δt_{G} fällt. Die Verzögerung des Übertragungssignals in den Bereich außerhalb des zulässigen Zeitbereichs Δt_{Imp} der Summenimpulsantwort 65 bewirkt, wie in Fig. 6B dargestellt, in der Messung der Impulsantwort eine Reduzierung des Signalpegels der in den zulässigen Zeitbereich Δt_{Imp} gefalteten Impulsantwort 69". Liegt eine Zeitverschiebung der Impulsantwort 69 um zwei Perioden vor, so reduziert sich der Signalpegel der zeitlich in den zulässigen Zeitbereichs Δt_{Imp} der Summenimpulsantwort 65 verschobenen Impulsantwort 69"' zusätzlich.
Eine Falsch-Interpretation der zeitlichen Verzögerung einer Impulsantwort kann auch an dem Modulationsfehlerverhältnis MER (modulation error rate = 20 * log(mittlerer Betrag der Symbolamplitude / mittlerer Betrag der Fehleramplitude)) erkannt werden. Liegt die Verzögerung einer Impulsantwort innerhalb des Schutzintervalls Δt_{G}, kann diese durch die Kanalschätzung ausgeglichen werden und das Modulationsfehlerverhältnis hat entsprechend der sonstigen Signalqualität einen hohen Wert. Liegt hingegen die Verzögerung der Impulsantwort außerhalb des Schutzintervalls, verschlechtert sich das Modulationsfehlerverhältnis.

Die Erfindung ist nicht auf das dargestellte Ausführungsbeispiel beschränkt. Es eignet sich nicht nur für OFDM-modulierte Mehrträgerverfahren, wie DAB und DVB-T, sondern auch für Einträgerverfahren., z. B. für das VSB (Vestigial Side Band)-Verfahren des ATSC-Standards, das in Nordamerika zur digitalen Fernsehübertragung eingesetzt wird. Außerdem sind sämtliche oben beschriebene Merkmale beliebig miteinander kombinierbar.

## Patentansprüche

1. Verfahren zur Überwachung der Zeitsynchronität von insgesamt n Sendern (2, 3, 4, 5, 6, 7, 8)in einem Gleichwellennetz (1), indem eine Referenzsummenimpulsantwort (30) der zu den n Sendern (2, 3, 4, 5, 6, 7, 8) des Gleichwellennetzes (1) gehörigen Übertragungskanäle mit einer gemessenen Summenimpulsantwort (52) der zu den n Sendern (2, 3, 4, 5, 6, 7, 8) des Gleichwellennetzes (1) gehörigen Übertragungskanäle verglichen wird,
**dadurch gekennzeichnet,**
**daß** durch eine Festlegung einer Referenzimpulsantwort (20) in der Referenzsummenimpulsantwort (30) zur Pilotimpulsantwort (29) und eine Referenzierung der übrigen Referenzimpulsantworten (21, 22, 23, 24, 25, 26, 27, 28) zur Pilotimpulsantwort (29) eine Klassifizierung aller im Gleichwellennetz (1) auftretenden Synchronitätsfehler in mehrere Synchronitätsfehlerlclassen durchgeführt wird.

2. Verfahren zur Überwachung der Zeitsynchronität nach Anspruch 1,
**dadurch gekennzeichnet,**
**daß** die Pilotimpulsantwort (29) die Referenzimpulsantwort (20) in der Referenzsummenimpulsantwort (30) mit dem höchsten Signalpegel ist.

3. Verfahren zur Überwachung der Zeitsynchronität nach Anspruch 2,
**dadurch gekennzeichnet,**
**daß** der Pilotimpulsantwort (29) der Referenzpegel 0dB zugewiesen wird.

4. Verfahren zur Überwachung der Zeitsynchronität nach Anspruch 3,
**dadurch gekennzeichnet,**
**daß** zur Ermittlung von möglichen Synchronitätsfehlern zwischen den Sendern (2, 3, 4, 5, 6, 7, 8) des Gleichwellennetzes (1) die gemessene Summenimpulsantwort (52) soweit zeitlich verschoben wird, bis die Impulsantwort (54) der gemessenen Summenimpulsantwort (52) mit dem höchsten Signalpegel zeitsynchron zur Pilotimpulsantwort (29) der Referenzsummenimpulsantwort (30) ist.

5. Verfahren zur Überwachung der Zeitsynchronität nach einem der Ansprüche 1 bis 4,
**dadurch gekennzeichnet,**
**daß** für jede Referenzimpulsantwort (21, 22, 23, 24, 25, 26, 27, 28) in der Referenzsummenimpulsantwort (30) außer der Pilotimpulsantwort (29) ein Fehlertoleranzbereich (31, 32, 33, 34, 35, 36, 37, 38), bestehend aus einem Fehlertoleranzband (33) in der Dimension der Zeit und/oder einem Fehlertoleranzband (40) in der Dimension des Signalpegels, definiert wird.

6. Verfahren zur Überwachung der Zeitsynchronität nach Anspruch 5,
**dadurch gekennzeichnet,**
**daß** entschieden wird, daß mindestens ein Synchronitätsfehler der Sender (2, 3, 4 , 5, 6, 7, 8) im Gleichwellennetz (1) vorliegt, sobald mindestens eine Impulsantwort (41, 42, 43, 44, 45, 46, 47, 48) der gemessenen Summenimpulsantwort (52) außerhalb des Fehlertoleranzbereiches (31, 32, 33, 34, 35, 36, 37, 38) der korrespondierenden Referenzimpulsantwort (21, 22, 23, 24, 25, 26, 27, 28) der Referenzsummenimpulsantwort (30) liegt.

7. Verfahren zur Überwachung der Zeitsynchronität nach Anspruch 6,
**dadurch gekennzeichnet,**
**daß** entschieden wird, daß ein Synchronitätsfehler einer ersten Synchronitätsfehlerklasse vorliegt, wenn genau eine Impulsantwort (41, 42, 43, 44, 45, 46, 47, 48) der gemessenen Summenimpulsantwort (52) außerhalb des Fehlertoleranzbereiches (31, 32, 33, 34, 35, 36, 37, 38) der korrespondierenden Referenzimpulsantwort (21, 22, 23, 24, 25, 26, 27, 28) der Referenzsummenimpulsantwort (30) liegt.

8. Verfahren zur Überwachung der Zeitsynchronität nach Anspruch 7,
**dadurch gekennzeichnet,**
**daß** entschieden wird, daß ein Synchronitätsfehler einer zweiten Synchronitätsfehlerklasse vorliegt, wenn mindestens zwei und gleichzeitig weniger als n-1 der insgesamt n Impulsantworten (41, 42, 43, 44, 45, 46, 47, 48) der gemessenen Summenimpulsantwort (52) außerhalb des Fehlertoleranzbereiches (31, 32, 33, 34, 35, 36, 37, 38) der korrespondierenden Referenzimpulsantwort (21, 22, 23, 24, 25, 26, 27, 28) der Referenzsummenimpulsantwort (30) liegen.

9. Verfahren zur Überwachung der Zeitsynchronität nach Anspruch 8,
**dadurch gekennzeichnet,**
**daß** entschieden wird, daß ein Synchronitätsfehler einer dritten Synchronitätsfehlerklasse vorliegt, wenn genau n-1 der insgesamt n Impulsantworten (41, 42, 43, 44, 45, 46, 47, 48) der gemessenen Summenimpulsantwort (52) außerhalb des Fehlertoleranzbereiches (31, 32, 33, 34, 35, 36, 37, 38) der korrespondierenden Referenzimpulsantwort (21, 22, 23, 24, 25, 26, 27, 28) der Referenzsummenimpulsantwort (30) liegen und eine positive Korrelation zwischen den n-1 Referenzimpulsantworten (21, 22, 23, 24, 25, 26, 27, 28) und den n-1 gemessenen Impulsantworten (41, 42, 43, 44, 45, 46, 47, 48) nachgewiesen wird.

10. Verfahren zur Überwachung der Zeitsynchronität nach Anspruch 9,
**dadurch gekennzeichnet,**
**daß** bei Auftreten eines Synchronitätsfehlers ein der jeweiligen Synchronitätsfehlerklasse entsprechende Alarm (A1, A2, A3) ausgelöst wird.

## Claims

1. Method for monitoring the time synchronicity of a total of n transmitters (2, 3, 4, 5, 6, 7, 8) in a common-wave network (1) by comparing a reference-sum impulse response (30) of the transmission channels associated with the n transmitters (2, 3, 4, 5, 6, 7, 8) of the common-wave network (1) with a measured-sum impulse response (52) of the transmission channels associated with the n transmitters (2, 3, 4, 5, 6, 7, 8) of the common-wave network (1),
**characterised in that**
a classification of all of the synchronicity errors occurring in the common-wave network (1) into several synchronicity-error classes is implemented by specifying a reference impulse response (20) in the reference-sum impulse response (30) relative to the pilot impulse response (29) and referencing the other reference impulse responses (21, 22, 23, 24, 25, 26, 27, 28) relative to the pilot impulse response (29).

2. Method for monitoring the time synchronicity according to claim 1,
**characterised in that**
the pilot impulse response (29) is the reference impulse response (20) in the reference-sum impulse response (30) with the highest signal level.

3. Method for monitoring the time synchronicity according to claim 2,
**characterised in that**
the reference level 0 dB is assigned to the pilot impulse response (29).

4. Method for monitoring the time synchronicity according to claim 3,
**characterised in that**,
in order to determine potential synchronicity errors between the transmitters (2, 3, 4, 5, 6, 7, 8) of the common-wave network (1), the measured-sum impulse response (52) is displaced in time until the impulse response (54) of the measured-sum impulse response (52) with the highest signal level is time-synchronous to the pilot impulse response (29) of the reference-sum impulse response (30).

5. Method for monitoring the time synchronicity according to any one of claims 1 to 4,
**characterised in that**,
in addition to the pilot impulse response (29), an error-tolerance range (31, 32, 33, 34, 35, 36, 37, 38), consisting of an error-tolerance band (33) in the dimension of time and/or an error-tolerance band (40) in the dimension of the signal level, is defined for each reference impulse response (21, 22, 23, 24, 25, 26, 27, 28) in the reference-sum impulse response (30).

6. Method for monitoring the time synchronicity according to claim 5,
**characterised in that**
a decision is made to the effect that at least one synchronicity error of the transmitters (2, 3, 4, 5, 6, 7, 8) is present in the common-wave network (1), as soon as at least one impulse response (41, 42, 43, 44, 45, 46, 47, 48) of the measured-sum impulse response (52) comes to be disposed outside the error-tolerance range (31, 32, 33, 34, 35, 36, 37, 38) of the corresponding reference impulse response (21, 22, 23, 24, 25, 26, 27, 28) of the reference-sum impulse response (30).

7. Method for monitoring the time synchronicity according to claim 6,
**characterised in that**
a decision is made to the effect that a synchronicity error of a first synchronicity-error class is present, when precisely one impulse response (41, 42, 43, 44, 45, 46, 47, 48) of the measured-sum impulse response (52) is disposed outside the error-tolerance range (31, 32, 33, 34, 35, 36, 37, 38) of the corresponding reference impulse response (21, 22, 23, 24, 25, 26, 27, 28) of the reference sum impulse response (30).

8. Method for monitoring the time synchronicity according to claim 7,
**characterised in that**
a decision is made to the effect that a synchronicity error of a second synchronicity-error class is present, when at least two and at the same time less than n-1 of the total of n impulse responses (41, 42, 43, 44, 45, 46, 47, 48) of the measured-sum impulse response (52) are disposed outside the error-tolerance range (31, 32, 33, 34, 35, 36, 37, 38) of the corresponding reference impulse response (21, 22, 23, 24, 25, 26, 27, 28) of the reference-sum impulse response (30).

9. Method for monitoring the time synchronicity according to claim 8,
**characterised in that**
a decision is made to the effect that a synchronicity error of a third synchronicity-error class is present, when precisely n-1 of the total of n impulse responses (41, 42, 43, 44, 45, 46, 47, 48) of the measured-sum impulse response (52) are disposed outside the error tolerance range (31, 32, 33, 34, 35, 36, 37, 38) of the corresponding reference impulse response (21, 22, 23, 24, 25, 26, 27, 28) of the reference-sum impulse response (30) and a positive correlation between the n-1 reference impulse responses (21, 22, 23, 24, 25, 26, 27, 28) and the n-1 measured impulse responses (41, 42, 43, 44, 45, 46, 47, 48) is demonstrated.

10. Method for monitoring the time synchronicity according to claim 9,
**characterised in that**,
in the event of a synchronicity error, an alarm (A1, A2, A3) corresponding to the respective synchronicity-error class is triggered.

## Revendications

1. Procédé de contrôle de la synchronisation temporelle de n émetteurs en tout (2, 3, 4, 5, 6, 7, 8) dans un réseau sur fréquence commune (1), dans lequel une réponse impulsionnelle globale de référence (30) pour les canaux de transmission appartenant aux n émetteurs (2, 3, 4, 5, 6, 7, 8) du réseau sur fréquence commune (1) est comparée à une réponse impulsionnelle globale mesurée (52) pour les canaux de transmission appartenant aux n émetteurs (2, 3, 4, 5, 6, 7, 8) du réseau sur fréquence commune (1), **caractérisé en ce que**, par une détermination d'une réponse impulsionnelle de référence (20) dans la réponse impulsionnelle globale de référence (30) en vue de la réponse impulsionnelle pilote (29) et un référencement des autres réponses impulsionnelles de référence (21, 22, 23, 24, 25, 26, 27, 28) en vue de la réponse impulsionnelle pilote (29), on réalise une classification de toutes les erreurs de synchronisation apparaissant dans le réseau sur fréquence commune (1) en plusieurs classes d'erreurs de synchronisation.

2. Procédé de contrôle de la synchronisation temporelle selon la revendication 1, **caractérisé en ce que** la réponse impulsionnelle pilote (29) est la réponse impulsionnelle de référence (20) dans la réponse impulsionnelle globale de référence (30) ayant le niveau de signal le plus élevé.

3. Procédé de contrôle de la synchronisation temporelle selon la revendication 2, **caractérisé en ce que** le niveau de référence 0 dB est affecté à la réponse impulsionnelle pilote (29).

4. Procédé de contrôle de la synchronisation temporelle selon la revendication 3, **caractérisé en ce que** pour déterminer d'éventuelles erreurs de synchronisation entre les émetteurs (2, 3, 4, 5, 6, 7, 8) du réseau sur fréquence commune (1), la réponse impulsionnelle globale mesurée (52) est décalée temporellement, jusqu'à ce que la réponse impulsionnelle (54) de la réponse impulsionnelle globale mesurée (52) ayant le niveau de signaux le plus élevé soit synchronisée temporellement avec la réponse impulsionnelle pilote (29) de la réponse impulsionnelle globale de référence (30).

5. Procédé de contrôle de la synchronisation temporelle selon une des revendications 1 à 4, **caractérisé en ce que** pour chaque réponse impulsionnelle de référence (21, 22, 23, 24, 25, 26, 27, 28) dans la réponse impulsionnelle globale de référence (30) en dehors de la réponse impulsionnelle pilote (29), est définie une zone de tolérance d'erreurs (31, 32, 33, 34, 35, 36, 37, 38), comprenant une bande de tolérance d'erreurs (33) dans la dimension temporelle et/ou une bande de tolérance d'erreur (40) dans la dimension du niveau de signal.

6. Procédé de contrôle de la synchronisation temporelle selon la revendication 5, **caractérisé en ce qu'**on décide qu'au moins une erreur de synchronisation des émetteurs (2, 3, 4, 5, 6, 7, 8) est présente dans le réseau sur fréquence commune (1), dès qu'au moins une réponse impulsionnelle (41, 42, 43, 44, 45, 46, 47, 48) de la réponse impulsionnelle globale mesurée (52) se situe en dehors de la zone de tolérance d'erreurs (31, 32, 33, 34, 35, 36, 37, 38) de la réponse impulsionnelle de référence correspondante (21, 22, 23, 24, 25, 26, 27, 28) de la réponse impulsionnelle globale de référence (30).

7. Procédé de contrôle de la synchronisation temporelle selon la revendication 6, **caractérisé en ce qu'**on décide qu'une erreur de synchronisation d'une première classe d'erreurs de synchronisation existe, lorsque précisément une réponse impulsionnelle (41, 42, 43, 44, 45, 46, 47, 48) de la réponse impulsionnelle globale mesurée (52) se situe en dehors de la zone de tolérance d'erreurs (31, 32, 33, 34, 35, 36, 37, 38) de la réponse impulsionnelle de référence correspondante (21, 22, 23, 24, 25, 26, 27, 28) de la réponse impulsionnelle globale de référence (30).

8. Procédé de contrôle de la synchronisation temporelle selon la revendication 7, **caractérisé en ce qu'**on décide qu'une erreur de synchronisation d'une deuxième classe d'erreurs de synchronisation existe, lorsqu'au moins deux et en même temps moins de n-1 parmi l'ensemble des n réponses impulsionnelles (41, 42, 43, 44, 45, 46, 47, 48) de la réponse impulsionnelle globale mesurée (52) se situent en dehors de la zone de tolérance d'erreurs (31, 32, 33, 34, 35, 36, 37, 38) de la réponse impulsionnelle de référence correspondante (21, 22, 23, 24, 25, 26, 27, 28) de la réponse impulsionnelle globale de référence (30).

9. Procédé de contrôle de la synchronisation temporelle selon la revendication 8, **caractérisé en ce qu'**on décide qu'une erreur de synchronisation d'une troisième classe d'erreurs de synchronisation existe, lorsque exactement n-1 parmi l'ensemble des n réponses impulsionnelles (41, 42, 43, 44, 45, 46, 47, 48) de la réponse impulsionnelle globale mesurée (52) se situent en dehors de la zone de tolérance d'erreurs (31, 32, 33, 34, 35, 36, 37, 38) de la réponse impulsionnelle de référence correspondante (21, 22, 23, 24, 25, 26, 27, 28) de la réponse impulsionnelle globale de référence (30), et lorsqu'une corrélation positive entre les n-1 réponses impulsionnelles de référence (21, 22, 23, 24, 25, 26, 27, 28) et les n-1 réponses impulsionnelles mesurées (41, 42, 43, 44, 45, 46, 47, 48) est décelée.

10. Procédé de contrôle de la synchronisation temporelle selon la revendication 9, **caractérisé en ce qu'**en cas d'apparition d'une erreur de synchronisation une alarme correspondant à la classe d'erreur de synchronisation respective (A1, A2, A3) est déclenchée.
